(19) Europäisches Patentamt
European Patent Office
Office européen des brevets

(11) EP 2 728 310 A1

(12) **EUROPÄISCHE PATENTANMELDUNG**

(43) Veröffentlichungstag:
07.05.2014 Patentblatt 2014/19

(51) Int Cl.:
*G01C 21/26* (2006.01)     *G06K 9/00* (2006.01)

(21) Anmeldenummer: 13187475.2

(22) Anmeldetag: 07.10.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **02.11.2012 DE 102012220021**

(71) Anmelder: **ROBERT BOSCH GMBH**
**70442 Stuttgart (DE)**

(72) Erfinder:
• **Niem, Wolfgang**
**31141 Hildesheim (DE)**
• **Scholz, Matthias**
**31139 Hildesheim (DE)**

(54) **Verfahren und Vorrichtung zum Erkennen einer über eine Rampe geführten Fahrbahn**

(57)    Die Erfindung betrifft ein Verfahren zum Erkennen einer über eine Rampe (104) geführten Fahrbahn (106) basierend auf einem, aus einer Perspektive eines Fahrzeugs (100) aufgenommenen Bild. Das Verfahren weist einen Schritt des Bestimmens, einen Schritt des Ermittelns und einen Schritt (306) des Vergleichens auf. Im Schritt des Bestimmens wird eine erste charakteristische Breite der Fahrbahn (106) im Bild an einer ersten Bildposition des Bilds und eine zweite charakteristische Breite der Fahrbahn (106) im Bild an einer zweiten Bildposition des Bilds ermittelt. Im Schritt des Ermittelns wird eine erwartete zweite charakteristische Breite unter Verwendung der ersten charakteristischen Breite und einem Abstand im Bild zwischen der ersten Bildposition und der zweiten Bildposition ermittelt. Im Schritt des Vergleichens wird die zweite charakteristische Breite mit der erwarteten zweiten charakteristischen Breite verglichen, um die Rampe (104) zu erkennen.

Fig. 2

**Beschreibung**

Stand der Technik

Die vorliegende Erfindung bezieht sich auf ein Verfahren zum Erkennen einer über eine Rampe geführten Fahrbahn, auf eine entsprechende Vorrichtung sowie auf ein entsprechendes Computerprogrammprodukt.

Die DE 10 2008 043 120 A1 beschreibt ein Ortungsverfahren, das Steigungen und Gefälle aus einem aktuellen Fahrzeug-Last Arbeitspunkt bestimmt, um eine Rampensituation auszuwerten. Dazu werden Lastkennlinien und die aktuelle Beladungssituation des Fahrzeugs ausgewertet.

Offenbarung der Erfindung

Vor diesem Hintergrund wird mit der vorliegenden Erfindung ein Verfahren zum Erkennen einer über eine Rampe geführten Fahrbahn, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Ein Bild einer Fahrbahn kann ausgewertet werden, um eine Steigung oder ein Gefälle der Fahrbahn zu erkennen. Die Neigung oder das Gefälle kann beispielsweise durch einen Verlauf der Fahrbahn über eine Rampe hervorgerufen sein. Insbesondere kann dazu eine Breite der Fahrbahn an unterschiedlichen Positionen im Bildverlauf ausgewertet werden. Bei dem Bild kann es sich um ein Bild handeln, das von einer Bilderfassung eines sich auf der Fahrbahn befindlichen Fahrzeugs aufgenommen wurde. Aus der Kenntnis, ob sich das Fahrzeug auf eine Rampe zubewegt oder die Rampe bereits befährt oder befahren hat, kann beispielsweise auf eine Position des Fahrzeugs geschlossen werden. Beispielsweise kann die Kenntnis dazu genutzt werden, um zu unterscheiden, ob sich das Fahrzeug auf eine Rampe einer Hochstraße zubewegt oder sich auf einer Hochstraße oder auf einer neben einer Hochstraße auf der Erdoberfläche geführten Straße befindet.

Ein Verfahren zum Erkennen einer über eine Rampe geführten Fahrbahn basierend auf einem, aus einer Perspektive eines Fahrzeugs aufgenommenen Bild, weist die folgenden Schritte auf:

Bestimmen einer ersten charakteristischen Breite der Fahrbahn im Bild an einer ersten Bildposition des Bilds und einer zweiten charakteristischen Breite der Fahrbahn im Bild an einer zweiten Bildposition des Bilds;

Ermitteln einer erwarteten zweiten charakteristischen Breite unter Verwendung der ersten charakteristischen Breite und einem Abstand im Bild zwischen der ersten Bildposition und der zweiten Bildposition; und

Vergleichen der zweiten charakteristischen Breite mit der erwarteten zweiten charakteristischen Breite, um die Rampe zu erkennen.

Unter einer Rampe kann ein ansteigendes bzw. abfallendes Teilstück einer Fahrbahn verstanden werden, das beispielsweise ein niedriges Fahrbahnniveau mit einem hohen Fahrbahnniveau verbindet. Auf der Rampe kann die Fahrbahn schräg nach oben oder schräg nach unten verlaufen. Anschließend an die Rampe kann die Fahrbahn eben verlaufen. Ein Bild aus einer Perspektive eines Fahrzeugs kann ein Umfeld des Fahrzeugs abbilden, wie es von einer Erfassungseinrichtung des Fahrzeugs erfasst werden kann. In dem Bild kann ein Objekt, das nahe an dem Fahrzeug angeordnet ist größer abgebildet werden, als ein gleichartiges Objekt, das weit von dem Fahrzeug entfernt ist. Ein Verhältnis der Größe der Abbildungen der Objekte steht dabei im Verhältnis zu einer Entfernung der Objekte von dem Fahrzeug. Eine charakteristische Breite kann eine Abmessung eines Bestandteils der Fahrbahn sein, die auf der Fahrbahn zumindest im Bereich des Bilds näherungsweise konstant ist. Beispielsweise kann die charakteristische Breite eine Breite eines Strichs einer Fahrbahnmarkierung sein. Ebenso kann eine Breite der Fahrbahn erfasst werden. Eine Bildposition kann eine Bildkoordinate oder ein Bildbereich sein. Der Abstand zwischen der ersten und der zweiten Bildposition kann beispielsweise durch eine Anzahl von zwischen den Positionen angeordneten Bildpunkten oder Bildzeilen definiert sein. Eine erwartete charakteristische Breite kann ein Referenzwert für ein Maß sein, das die erfasste charakteristische Breite an der Bildposition aufweisen sollte. Beispielsweise kann die erwartete charakteristische Breite aufgrund einer optischen Verkürzung bezogen auf die Entfernung vom Fahrzeug ermittelt werden. Wenn die erwartete charakteristische Breite kleiner ist, als die gemessene charakteristische Breite, dann kann darauf geschlossen werden, dass die Fahrbahn an der zweiten Bildposition um einen Rampenwinkel schräg zu der Fahrbahn an der ersten Bildposition ist.

Gemäß einer Ausführungsform kann eine Rampe eine Auffahrt auf eine Hochstraße darstellen. Hochstraßen werden insbesondere in Ballungszentren eingesetzt. Durch den beschriebenen Ansatz kann eine Routenführung, beispielsweise von GPS-basierten Navigationssystemen auf Hochstraßen verbessert werden. Generell kann mit dem beschriebenen Ansatz eine Lokalisierung, beispielsweise per GPS, Odometrie oder Map-Matching in Ballungszentren mit mehreren übereinanderliegenden Straßen verbessert werden. Durch eine klare Erkennung, ob das Fahrzeug über eine Rampe auf eine Hochstraße gefahren ist oder aber auf der unteren Straße geblieben ist, wird eine Leistungsfähigkeit einer Zielführung in solchen Szenarien stark verbessert. Der hier vorgestellte Ansatz beschreibt ein kostengünstiges Verfahren und konkrete Ausführungsformen für eine videobasierte Detektion von Rampen, die Steigungen oder Gefälle darstellen können, mit on-Board Videosensorik. Die Routenführung bei GPS-basierter Ortung für solche Rampensituationen wird verbessert. Es handelt sich um eine echte "Plug-and-Play"-Lösung.

Fahrstreifenbreiten können beispielsweise im Videobild einer Videokamera des Fahrzeugs durch eine Bildverarbeitung in unterschiedlichen Entfernungen vom Fahrzeug ausgewertet werden. Alternativ oder ergänzend können natürliche Landmarken im Videobild durch die Bildverarbeitung ausgewertet werden.

Die erwartete zweite charakteristische Breite kann ferner unter Verwendung der Perspektive des Fahrzeugs ermittelt werden. Die Perspektive kann beispielsweise durch eine Höhe der Erfassungseinrichtung über der Straße bestimmt sein. Ebenso kann die Perspektive durch eine Brechkraft eines optischen Systems der Erfassungseinrichtung bestimmt sein. Beispielsweise kann die zu erwartende optische Verkürzung geringer sein, wenn die Erfassungseinrichtung höher angeordnet ist. Beispielsweise kann die zu erwartende optische Verkürzung größer sein, wenn eine Brennweite des optischen Systems kleiner ist. Die Verkürzung kann auch nichtlinear sein.

Es kann je eine Anzahl von Bildpixeln ausgewertet werden, die in einer Linie nebeneinander zwischen zwei charakteristischen Punkten der Fahrbahn im Bild angeordnet sind, um die erste charakteristische Breite und die zweite charakteristische Breite zu bestimmen. Die Erfassungseinrichtung kann eine digitale Kamera, insbesondere eine Videokamera sein. Durch ein Bestimmen auf Pixelebene kann eine volle Auflösung der Erfassungseinrichtung ausgenutzt werden.

Die Bildpixel können in einer Reihe oder Spalte des Bilds angeordnet sein. Ein Bildsensor kann eine orthogonale Sensormatrix sein. Durch Bestimmen in Spalten oder Zeilen der Matrix kann bezogen auf eine horizontale Bezugsebene des Fahrzeugs erfasst werden werden, wenn die Sensormatrix an der Bezugsebene ausgerichtet ist.

Die erste charakteristische Breite kann einen ersten Abstand im Bild zwischen einer ersten Längsmarkierung auf der Fahrbahn und einer zweiten Längsmarkierung auf der Fahrbahn an der ersten Bildposition repräsentieren. Die zweite charakteristische Breite kann einen zweiten Abstand im Bild zwischen der ersten Längsmarkierung und der zweiten Längsmarkierung an der zweiten Bildposition repräsentieren. Eine Längsmarkierung kann beispielsweise eine Fahrbahnbegrenzungslinie, eine Leitlinie oder eine Mittenlinie sein. Ein Abstand zwischen den Längsmarkierungen ist in der Regel größer als 180 cm und weist nur geringe Veränderungen im Verlauf der Straße auf. Daher kann der Abstand auch in großer Entfernung vor dem Fahrzeug sicher bestimmt werden. Durch die Bestimmung in großem Abstand kann die Rampe bereits frühzeitig erkannt werden.

Die erste Bildposition kann eine erste Projektion einer ersten Schnittebene auf die Fahrbahn repräsentieren, wobei die erste Schnittebene unter einem ersten Tiefenwinkel zu einer Bezugsebene des Bilds ausgerichtet ist. Die zweite Bildposition kann eine zweite Projektion einer zweiten Schnittebene auf die Fahrbahn repräsentieren, wobei die zweite Schnittebene unter einem zweiten Tiefenwinkel zu der Bezugsebene des Bilds ausgerichtet ist. Eine Projektion einer Schnittebene auf der Fahrbahn kann eine Gerade sein. Eine Bezugsebene des Bilds kann mit der Bezugsebene des Fahrzeugs übereinstimmen. Die Bezugsebene kann bei normalen Verhältnissen am Fahrzeug waagerecht ausgerichtet sein. Ein Tiefenwinkel kann von einer Horizontebene nach unten ausgerichtet sein. Die Schnittebenen können sich in einer Bildebene der Erfassungseinrichtung schneiden.

Es kann zumindest eine weitere charakteristische Breite der Fahrbahn im Bild an einer weiteren Bildposition des Bilds bestimmt werden, wobei die weitere Bildposition zwischen der ersten Bildposition und der zweiten Bildposition angeordnet ist. Es kann die erwartete zweite charakteristische Breite ferner unter Verwendung der weiteren charakteristischen Breite und einem Abstand zwischen der ersten Bildposition und der weiteren Bildposition und/oder einem Abstand zwischen der zweiten Bildposition und der weiteren Bildposition ermittelt werden. Durch eine weitere charakteristische Breite kann ein Einfluss von Bewegungen des Fahrzeugs auf das Erkennen reduziert werden. Die weitere charakteristische Breite ermöglicht eine robuste Erkennung der Rampe in dem Bild.

Ein Verfahren zum Erkennen einer über eine Rampe geführten Fahrbahn basierend auf einem aus einer Perspektive eines Fahrzeugs aufgenommenen Bild weist die folgenden Schritte auf:

Bestimmen einer charakteristischen Höhe eines markanten Bildpunkts des Bilds bezüglich einer Bezugsebene des Bilds, wobei der markante Bildpunkt ein charakteristisches Merkmal einer Landmarke in dem Bild abbildet;

Ermitteln einer erwarteten Höhe des markanten Bildpunkts unter Verwendung einer hinterlegten Position des charakteristischen Merkmals der Landmarke; und Vergleichen der charakteristischen Höhe mit der erwarteten Höhe, um die Rampe zu erkennen.

Unter einer charakteristischen Höhe kann ein Vertikalwinkel verstanden werden, der zwischen einer Linie von dem markanten Bildpunkt zu der Erfassungseinrichtung und einer horizontalen Ebene durch die Erfassungseinrichtung aufspannt, ist. Eine Landmarke kann ein exponiertes Objekt oder ein Gebäude oder eine Infrastruktureinrichtung sein. Ein charakteristischer Punkt kann beispielsweise ein, durch einen Bildverarbeitungsalgorithmus wiedererkennbares Merkmal der Landmarke sein. Beispielsweise eine Kirchturmspitze, eine Kante eines Hauses, ein First. Der charakteristische Punkt kann auch eine Baumspitze sein. Eine erwartete Höhe kann durch räumliche Berechnungen unter Verwendung der Position der Landmarke und der Position des Fahrzeugs ermittelt werden. Die erwartete Höhe kann auch aus einer hinterlegten Datenbank entnommen werden.

Die vorliegende Erfindung schafft ferner eine Vorrichtung , die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Signale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem

Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:

Fig. 1     eine Darstellung eines Fahrzeugs mit einer Vorrichtung zum Erkennen einer über eine Rampe geführten Fahrbahn gemäß einem Ausführungsbeispiel der vorliegenden Erfindung;

Fig. 2     eine Darstellung eines Bilds einer Kamera eines Fahrzeugs zum Durchführen eines Verfahrens zum Erkennen einer über eine Rampe geführten Fahrbahn gemäß einem Ausführungsbeispiel der vorliegenden Erfindung;

Fig. 3a    ein Ablaufdiagramm eines Verfahrens zum Erkennen einer über eine Rampe geführten Fahrbahn gemäß einem Ausführungsbeispiel der vorliegenden Erfindung;

Fig. 3b    ein Ablaufdiagramm eines Verfahrens zum Erkennen einer über eine Rampe geführten Fahrbahn gemäß einem weiteren Ausführungsbeispiel der vorliegenden Erfindung;

Fig. 4     eine Darstellung eines Verkehrsknotenpunkts mit Rampen; und

Fig. 5     eine Darstellung eines Bilds einer Kamera eines Fahrzeugs zum Durchführen eines Verfahrens zum Erkennen einer über eine Rampe geführten Fahrbahn gemäß einem weiteren Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

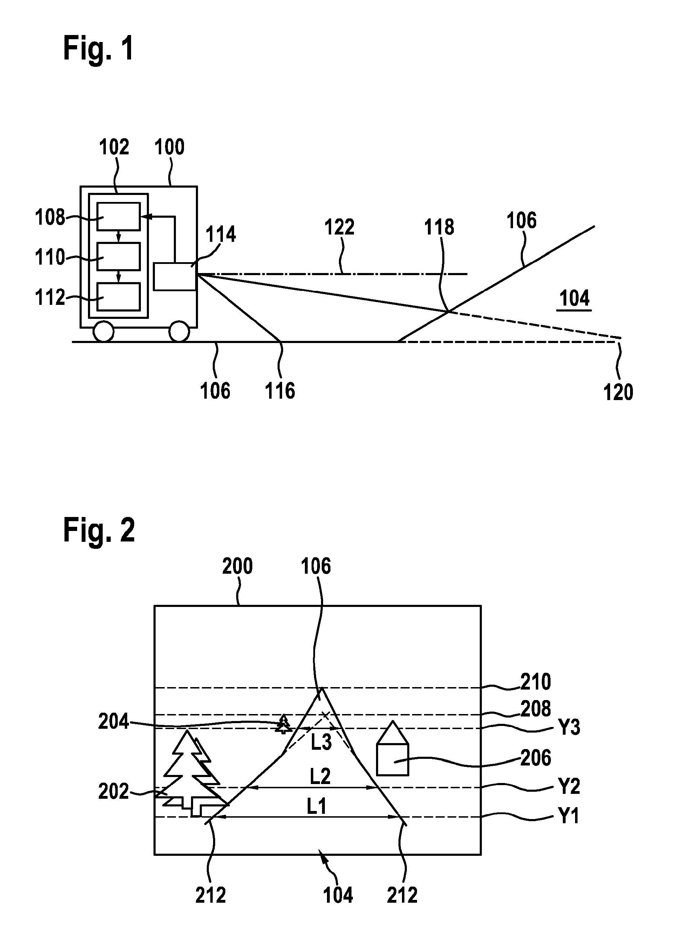

Fig. 1 zeigt eine Darstellung eines Fahrzeugs 100 mit einer Vorrichtung 102 zum Erkennen einer über eine Rampe 104 geführten Fahrbahn 106 gemäß einem Ausführungsbeispiel der vorliegenden Erfindung. Das Fahrzeug 100 ist auf einem ebenen Teilstück der Fahrbahn 106 angeordnet und fährt auf die Rampe 104 zu. Auf der Rampe 104 ist ein weiteres Teilstück der Fahrbahn 106 schräg zu dem ebenen Teilstück ausgerichtet. Die Vorrichtung 102 weist eine Einrichtung 108 zum Bestimmen, eine Einrichtung 110 zum Ermitteln und eine Einrichtung 112 zum Vergleichen auf. Das Fahrzeug 100 weist ferner eine Umfelderfassungseinrichtung 114 auf. In diesem Ausführungsbeispiel ist die Umfelderfassungseinrichtung 114 eine in Fahrtrichtung ausgerichtete Videokamera 114. Die Videokamera 114 ist dazu ausgebildet, einen Bereich der Fahrbahn 106 vor dem Fahrzeug 100 zu erfassen und in einer Bildinformation bereitzustellen.

Die Bildinformation wird von der Einrichtung 108 zum Bestimmen empfangen, um in dem von der Bildinformation repräsentierten Bild eine erste charakteristische Breite der Fahrbahn 106 im Bild an einer ersten Bildposition des Bilds und zumindest eine zweite charakteristische Breite der Fahrbahn 106 im Bild an einer zweiten Bildposition des Bilds zu bestimmen. Die erste Bildposition bildet dabei eine erste Position 116 auf der Fahrbahn 106 vor dem Fahrzeug 100 ab. Die zweite Bildposition bildet eine zweite Position 118 auf der Fahrbahn 106 vor dem Fahrzeug 100 ab. Die erste Position 116 ist näher an dem Fahrzeug 100 angeordnet, als die zweite Position 118. Aufgrund der optischen Verkürzung aus der Perspektive des Fahrzeugs bei zunehmender Entfernung vom Fahrzeug 100 wird die zweite charakteristische Breite im Bild kürzer dargestellt, als die erste charakteristische Breite, obwohl die tatsächliche charakteristische Breite der Fahrbahn 106 an der zweiten Position 118 gleich der tatsächlichen charakteristischen Breite an der ersten Position 116 ist. Je höher die Umfelderfassungseinrichtung 114 im Fahrzeug 100 angeordnet ist, umso geringer wird die optische Verkürzung. In diesem Ausführungsbeispiel wird als charakteristische Breite eine Breite eines Fahrsteifens der Fahrbahn 106 bestimmt.

Basierend auf der ersten charakteristischen Breite und einem Abstand im Bild zwischen der ersten Bildposition und der zweiten Bildposition wird in der Einrichtung 110 zum Ermitteln eine erwartete zweite charakteristische Breite ermittelt. Die erwartete zweite charakteristische Breite entspricht dabei einer Breite einer virtuellen Abbildung des Fahrstreifens auf der Fahrbahn 106 an einer erwarteten Position 120, wenn die Fahrbahn 106 ohne Rampe 104 eben fortgeführt wäre. Die Position 120 ist in einer direkten Verlängerung einer optischen Achse von der Umfelderfassungseinrichtung durch die zweite Position 118 angeordnet. Die optische Achse zu der Position 120 ist unter einem kleineren Tiefenwinkel zu einer Bezugsebene 122 der Umfelderfassungseinrichtung 114 angeordnet, als die optische Achse zwischen der Umfelderfassungseinrichtung 114 und der ersten Position 116. Die optischen Achsen repräsentieren dabei Schnittebenen, an denen die charakteristischen Breiten erfasst werden.

Die zweite charakteristische Breite wird in der Einrichtung 112 zum Vergleichen mit der erwarteten zweiten charakteristischen Breite verglichen. Da das Fahrzeug 100 auf die Rampe 104 zufährt, ist die zweite Position 118 näher an der Umfelderfassungseinrichtung 114 angeordnet, als die erwartete Position 120. Dadurch wird die Breite des Fahrstreifens optisch weniger verkürzt, als ohne die Rampe 104. Im Bild erscheint die zweite charakteristische Breite deshalb größer, als die erwartete zweite charakteristische Breite. Im dargestellten Fall ist die zweite charakteristische Breite im Bild um mehr als einen Toleranzbereich größer, als die erwartete zweite charakteristische Breite. Daher wird von der Einrichtung 112 zum Vergleichen die Rampe 104 erkannt.

Mit anderen Worten zeigt Fig. 1 ein Gesamtsystem zum Erkennen einer über eine Rampe 104 geführten Fahrbahn 106 gemäß einem Ausführungsbeispiel der vorliegenden Erfindung. Das Gesamtsystem besteht aus einer Videokamera 114, die an eine Rechen-Plattform 102 mit Ressourcen für Bildverarbeitung angeschlossen ist, einem nicht dargestellten Navigationsmodul mit Ortung und elektronischem Horizont und optional aus einer Datenbank zur Ablage von (gelernten) Landmarken. Mithilfe der Kamera 114 kann eine Rampe / Steigung / Gefälle erkannt werden. Die Detektion der Rampen 104 erfolgt über Verhältnisse detektierter Fahrstreifenbreiten in Videobildern, sodass die Detektion unempfindlich gegen Nickbewegungen des Fahrzeugs 100 ist. Die Rampensituation kann mit Hilfe von natürlichen Landmarken im Videobild aufgelöst werden. Nach der Detektion von Rampen 104 nach dem hier vorgestellten Ansatz des "Fahrstreifenbreitenverfahrens" können natürliche Landmarken im Bild gesucht werden, die mit ihrer Bild-Position und/oder der zugehörigen GPS-Position in eine Datenbank geschrieben werden. Eine Ortungseinrichtung des Fahrzeugs 100 kann das System zur Rampenerkennung für eine verbesserte Eigenortung nutzen.

Fig. 2 zeigt eine Darstellung eines Bilds 200 einer Kamera eines Fahrzeugs zum Durchführen eines Verfahrens zum Erkennen einer über eine Rampe 104 geführten Fahrbahn 106 gemäß einem Ausführungsbeispiel der vorliegenden Erfindung. Das Bild 200 zeigt eine Perspektive einer Rückfahrkamera des Fahrzeugs. Das Bild 200 ist rechteckig. In dem Bild 200 ist die Fahrbahn 106 hinter dem Fahrzeug dargestellt. Das Fahrzeug ist auf der Rampe 104 angeordnet. Im Bild 200 sind neben der Fahrbahn 106 und der Rampe 104 ein erster Baum 202, ein zweiter Baum 204 und ein Haus 206 dargestellt. Das Bild 200 weist Bildpunkte in horizontalen Zeilen und vertikalen Spalten auf. Jedem Bildpunkt ist eine Bildpunktkoordinate zugeordnet. Im Bild 200 sind mehrere horizontale Zeilen Y1, Y2, Y3, 208, 210 hervorgehoben. Die erste hervorgehobene Zeile Y1 markiert eine erste Bildposition und weist eine erste vertikale Höhe auf, in der eine erste charakteristische Breite L1 der Fahrbahn 106 erfasst wird. Die erste charakteristische Breite L1 wird nahe hinter dem Fahrzeug erfasst. Die zweite hervorgehobene Zeile Y2 markiert eine zweite Bildposition und weist eine zweite vertikale Höhe auf, in der eine zweite charakteristische Breite L2 der Fahrbahn 106 erfasst wird. Die erste Bildposition Y1 und die Bildposition Zeile Y2 weisen einen ersten Abstand (Y2 - Y1) voneinander auf. Die dritte hervorgehobene Zeile Y3 markiert eine dritte Bildposition und weist eine dritte vertikale Höhe auf, in der eine dritte charakteristische Breite L3 der Fahrbahn 106 erfasst wird. Die zweite Bildposition ist zwischen der ersten Bildposition und der dritten Bildposition angeordnet. Die dritte Bildposition Y3 weist einen zweiten Abstand (Y3 - Y2) von der zweiten Bildposition Y2 auf. In diesem Ausführungsbeispiel werden die charakteristischen Breiten L1, L2, L3 zwischen Längsmarkierungen der Fahrbahn, insbesondere Fahrstreifenbegrenzungslinien 212 erfasst. Eine vierte Zeile 208 repräsentiert einen erwarteten Horizont, wie er von der Kamera erfasst würde, wenn das Fahrzeug nicht auf der Rampe 104 angeordnet wäre. Die vierte Zeile repräsentiert dabei eine Bezugsebene der Kamera, mit der das Bild 200 erfasst wurde. Die dritte charakteristische Breite L3 wird knapp unterhalb des erwarteten Horizonts erfasst. Die oberste hervorgehobene Zeile 210 repräsentiert einen tatsächlichen Horizont im Bild 200, wie er erfasst wird, während das Fahrzeug bei einer Rampenfahrt die Rampe 104 hinauffährt. Der erfasste Horizont weist eine größere vertikale Höhe auf, als der erwartete Horizont. Die erste charakteristische Breite L1 und die zweite charakteristische Breite L2 werden auf der Rampe 104 erfasst. Deshalb schneiden sich Fluchtlinien durch Endpunkte der ersten charakteristischen Breite L1 und der zweiten charakteristischen Breite L2 in einem ersten Fluchtpunkt, der auf dem erwarteten Horizont liegt. Die Fahrbahn 106, die nicht auf der Rampe 104 angeordnet ist, ist gegenüber der Rampe 104 schräg ausgerichtet. Deshalb sind dort die Seitenbegrenzungslinien der Fahrbahn 106 auf einen zweiten Fluchtpunkt ausgerichtet, der auf dem tatsächlichen Horizont liegt. Da die dritte charakteristische Breite L3 an Seitenbegrenzungen der Fahrbahn 106 erfasst wird, die auf den tatsächlichen Horizont ausgerichtet sind, erscheint die dritte charakteristische Breite L3 im Bild 200 größer, als sie ohne Rampe 104 erwartet wird. Durch einen Vergleich zwischen der erfassten dritten charakteristischen Breite L3 und der erwarteten dritten charakteristischen Breite kann die Rampe 104 erkannt werden.

Mit anderen Worten zeigt Fig. 2 ein Bild einer videobasierten Erkennung von Rampen 104 zur robusten Detektion von Rampen 104 durch Vermessung der Straßenbreite L1, L2, L3 im Bild 200 an drei vertikalen Höhen Y1, Y2, Y3.

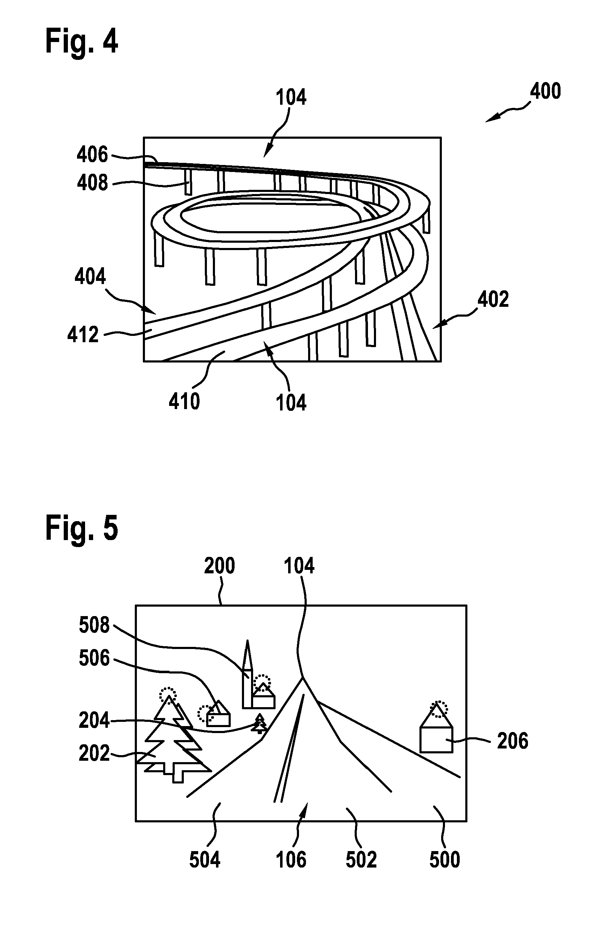

Wenn bei aktiver Route oder durch Auswertung des elektronischen Horizonts 208 eine nahende Rampensituation vorhergesagt wird, wird die Bildverarbeitung aktiviert. Falls Landmarken 202, 204, 206 mit zugehörigen Bildmerkmalen für diese Rampe 104 in einer Datenbank vorliegen, wird in den Videobildern 200 einer aus dem Fahrzeug gerichteten Kamera nach diesen Landmarken 202, 204, 206 gesucht, die durch eindeutige Bildmerkmale beschrieben sind (wie in Fig. 5 dargestellt). Je nach Position der wiedergefundenen Landmarken 202, 204, 206 im Bild 200 wird die wahrscheinlichste Situation berechnet (beispielsweise auf der Rampe 104 / nicht auf der Rampe 104). Die Begrenzungslinien des selbst befahrenen Fahrstreifens im Bild 200 werden gesucht und die Breiten L1, L2 und L3 an drei vertikalen Positionen im Bild 200 ausgewertet, unter Verwendung der in Fig. 2 dargestellten geometrischen Größen.

Für den Horizont 208 ohne Rampe 104 gilt

$$(Y2-Y1)/(L2-L1)=(Y3-Y1)/(L3-L1)$$

$$(L3-L1)*(Y2-Y1)=(Y3-Y1)*(L2-L1)$$

$$L3*(Y2-Y1)=L1*(Y2-Y1)+(Y3-Y1)*(L2-L1)$$

$$L3=L1+[(Y3-Y1)*(L2-L1)]/(Y2-Y1)$$

Für Y1= 0 gesetzt:

$$L3=L1+(Y3*(L2-L1))/Y2$$

Für die Rampen-Delektion gilt:

$$L3>L1+(Y3*(L2-L1))/Y2+Threshold;$$

Threshold ist dabei ein von der Kamera- und Einbaugeometrie abhängiger Schwellwert. Beispielsweise verschiebt sich der Horizont im Bild bei einer Rampensteigung von 5% und einer 480-Zeilen aufgelösten Rückfahrkamera mit 90 Grad vertikalem Öffnungswinkel um mehr als 10 Bildpunkte und ist damit klar detektierbar. Ein passender Wert für Threshold wäre dann z. B. 5 Bildpunkte.

Durch die Verwendung der Fahrstreifen-Breitenverhältnisse ist das Verfahren robust gegen Nick-Bewegungen des Fahrzeugs. Falls Landmarken 202, 204, 206 an dieser GPS-Position verfügbar sind, werden die Ergebnisse unter Verwendung der jeweiligen Detektionsgüten zusammengeführt. Falls keine Landmarken vorhanden sind, kann in dem Bild 200 nach Landmarken 202, 204, 206 gesucht werden, die dann mit ihren 2D-Positionen im Bild 200 und der zugehörigen GPS-Position in eine Datenbank geschrieben werden können, um eine "Lernende Karte" zu erhalten.

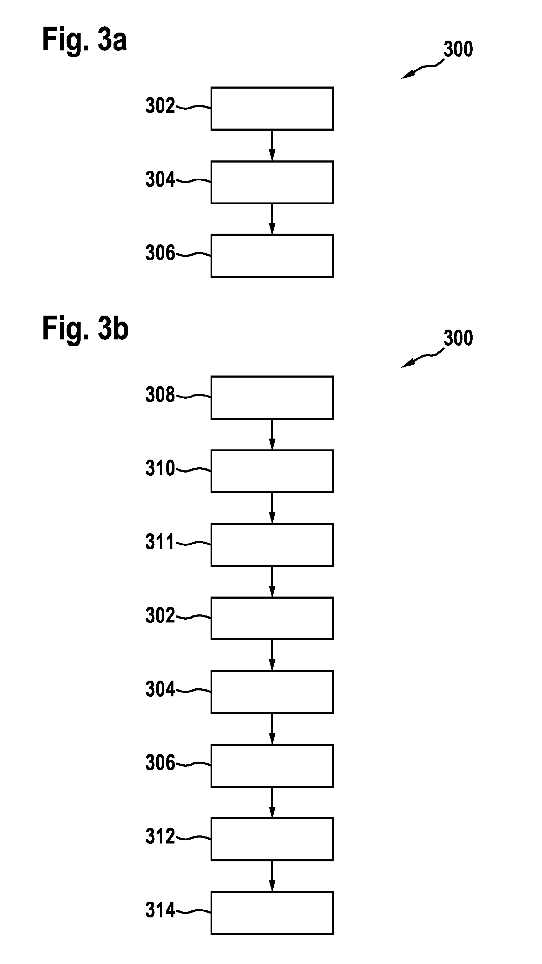

Fig. 3a zeigt ein Ablaufdiagramm eines Verfahrens 300 zum Erkennen einer über eine Rampe geführten Fahrbahn gemäß einem Ausführungsbeispiel der vorliegenden Erfindung. Das Verfahren 300 wird basierend auf einem, aus einer Perspektive eines Fahrzeugs aufgenommenen Bild ausgeführt. Das Verfahren 300 weist einen Schritt 302 des Bestimmens, einen Schritt 304 des Ermittelns und einen Schritt 306 des Vergleichens auf. Im Schritt 302 des Bestimmens wird eine erste charakteristische Breite der Fahrbahn im Bild an einer ersten Bildposition des Bilds bestimmt. Im Schritt 302 des Bestimmens wird weiterhin zumindest eine zweite charakteristische Breite der Fahrbahn im Bild an einer zweiten Bildposition des Bilds bestimmt. Im Schritt 304 des Ermittelns wird eine erwartete zweite charakteristische Breite unter Verwendung der ersten charakteristischen Breite und einem Abstand im Bild zwischen der ersten Bildposition und der zweiten Bildposition ermittelt. Im Schritt 306 des Vergleichens wird die zweite charakteristische Breite mit der erwarteten zweiten charakteristischen Breite verglichen, um die Rampe zu erkennen.

Gemäß einem weiteren Ausführungsbeispiel kann im Schritt 302 des Bestimmens eine charakteristische Höhe eines markanten Bildpunkts des Bilds bezüglich einer Bezugsebene des Bilds bestimmt werden, wobei der markante Bildpunkt ein charakteristisches Merkmal einer Landmarke in dem Bild abbildet. Im Schritt 304 des Ermittelns kann eine erwartete Höhe des markanten Bildpunkts unter Verwendung einer hinterlegten Position des charakteristischen Merkmals der Landmarke ermittelt werden. Im Schritt des Vergleichens kann die charakteristische Höhe mit der erwarteten Höhe verglichen werden, um die Rampe zu erkennen.

Fig. 3b zeigt ein Ablaufdiagramm eines erweiterten Verfahrens 300 zum Erkennen einer über eine Rampe geführten Fahrbahn gemäß einem weiteren Ausführungsbeispiel der vorliegenden Erfindung. Das Verfahren 300 weist einen Schritt 308 des Aktivierens, einen Schritt 310 des Suchens und einen Schritt 311 des Bestimmens auf, die vor den bereits anhand von Fig. 3a beschriebenen Schritten 302, 304, 306 ausgeführt werden. Ferner weist das Verfahren einen Schritt 312 des Zusammenführens und einen Schritt 314 des Ergänzens auf, die anschließend an eine Ausführung der Schritte 302, 304, 306 ausgeführt werden. Das Verfahren wird während der Fahrt eines Fahrzeugs unter Verwendung zumindest einer Kamera des Fahrzeugs ausgeführt. In Ergänzung zu dem anhand von Fig. 3a zuerst beschriebenen Verfahren 300 erfolgt gemäß dem anhand von Fig. 3b beschriebenen Verfahren 300 eine Verwendung von Landmarken und ein Einbringen ermittelter Werte in eine lernende Karte.

Im Schritt 308 des Aktivierens wird entsprechend auf eine Annäherung an eine Rampensituation eine Bildverarbeitung zur Rampenerkennung aktiviert. Die Bildverarbeitung kann dabei durch eine Position des Fahrzeugs, beispielsweise unter Verwendung eines Navigationssystems, in einer Umgebung einer in einer Karte gekennzeichneten Rampe aktiviert werden.

Wenn an der aktuellen Position des Fahrzeugs bekannte Landmarken vorhanden sind, wird im Schritt 310 in dem Bild nach den Landmarken gesucht. In einem Schritt 311 des Bestimmens wird je nach Position der Landmarken die wahrscheinlichste Situation des Fahrzeugs bestimmt oder berechnet, d. h. es wird bestimmt, ob sich das Fahrzeug auf einer Rampe befindet oder nicht.

Im Schritt 302 des Bestimmens werden, werden, sofern nicht bereits im Schritt 310 durchgeführt, Straßenbegrenzungslinien einer Straße, auf der das Fahrzeug fährt, gesucht. Ferner werden im Schritt 302, wie anhand von Fig. 3a beschrieben, charakteristische Breiten der Straße bestimmt. Im Schritt 304 des Ermittelns wird, wie anhand von Fig. 3a beschrieben, eine erwartete charakteristische Breite ermittelt. Im Schritt 306 des Vergleichens wird, wie in Fig. 3a, die charakteristische Breite mit der erwarteten charakteristischen Breite verglichen, um die Rampe zu erkennen. Es werden also die Breiten ausgewertet, um die Rampensituation zu analysieren.

Wenn an der aktuellen Position des Fahrzeugs bekannte Landmarken vorhanden sind, die zur Durchführung des Schritts 311 verwendet werden konnten, werden im Schritt 312 des Zusammenführens die Ergebnisse der Schritte 306, 311 zusammengeführt. Dabei werden die Ergebnisse unter Verwendung von Detektionsgüten zusammengeführt, da die Ergebnisse aus den Schritten 306, 311 durchaus auch unterschiedlich sein können. Die Detektionsgüten können beispielsweise eine Wahrscheinlichkeit repräsentieren, dass die Landmarken und/oder die Straßenbegrenzungslinien richtig erkannt worden sind. Wenn die Rampe entweder nur über die charakteristischen Breiten oder nur über die Landmarken erkannt worden ist, kann das Ergebnis mit der höheren Detektionsgüte verwendet werden.

Wenn an der aktuellen Position des Fahrzeugs keine bekannten Landmarken vorhanden sind, wenn es also noch keine Landmarken für diese Rampensituation gibt, werden im Schritt 314 des Ergänzens Landmarken für diese Situation gesucht und in die Datenbank eingefügt. Dadurch kann in der Datenbank eine "lernende Karte" umgesetzt werden. Wenn nach dem Schritt 314 des Ergänzens ein anderer Verkehrsteilnehmer an der gleichen Stelle vorbeifährt, sind jetzt aktuelle Landmarken in der Datenbank hinterlegt, die sich zur Erkennung einer Rampensituation eignen.

Fig. 4 zeigt eine Darstellung eines Verkehrsknotenpunkts 400 mit Rampen 104. Der Verkehrsknotenpunkt 400 weist mehrere übereinanderliegende Ebenen auf, die durch die Rampen 104 miteinander verbunden sind. An dem Verkehrsknotenpunkt 400 treffen eine erste Straße 402 und eine zweite Straße 404 zusammen, um als dritte Straße 406 über eine hohe Brücke 408 geführt zu werden. Die erste Straße 402 weist mehrere parallel verlaufende Fahrstreifen für eine erste Fahrtrichtung zur Brücke 408 und mehrere parallel verlaufende Fahrstreifen für eine zweite Fahrtrichtung von der Brücke 408 auf einer gemeinsamen Fahrbahn auf. Die erste Straße 402 ist als Hochstraße auf Stelzen ausgeführt. Die erste Straße 402 verläuft in einer ersten Ebene. Die zweite Straße 404 weist eine erste Richtungsfahrbahn 410 mit mehreren Fahrstreifen für die erste Fahrtrichtung und eine zweite Richtungsfahrbahn 412 mit mehreren Fahrstreifen für die zweite Fahrtrichtung auf. Beide Richtungsfahrbahnen 410, 412 sind als Rampen 104 ausgeführt, die eine unterste Ebene mit der ersten Ebene verbinden. Dabei kreuzt die erste Richtungsfahrbahn 410 die erste Straße 402 auf einer zweiten Ebene. Die zweite Ebene ist höher als die erste Ebene. Die Fahrstreifen der ersten Richtungsfahrbahn 410 werden in der ersten Fahrtrichtung von rechts an die Fahrstreifen der ersten Straße 402 herangeführt, um die Richtungsfahrbahn der dritten Straße 406 in die erste Fahrtrichtung zu bilden. Die Richtungsfahrbahn in der zweiten Fahrtrichtung der dritten Straße 406 wird in die Fahrstreifen der zweiten Richtungsfahrbahn 412 und die Fahrstreifen der ersten Straße 402 geteilt. Die Fahrstreifen der zweiten Richtungsfahrbahn 412 werden in der zweiten Fahrtrichtung nach rechts von den Fahrstreifen der ersten Straße 402 weggeführt. Die Richtungsfahrbahnen der dritten Straße 306 beschreiben eine Kurve um mehr als 360°. Dabei sind sie als Auffahrtsrampe 104 bzw. Abfahrtsrampe 104 der Brücke 408 ausgebildet und verbinden die erste

Ebene mit einer dritten Ebene der Brücke 408, die höher als die zweite Ebene ist. Unterhalb des Verkehrsknotens 400, auf der untersten Ebene verlaufen weitere Straßen mit Kreuzungen, wobei Fahrstreifen der zweiten Straße 404 unter der ersten Straße 402 hindurchgeführt sind. An mehreren Positionen des Verkehrsknotens befinden sich Fahrstreifen in zumindest zwei Ebenen übereinander. Unter Verwendung des hier vorgestellten Ansatzes kann festgestellt werden, ob ein Fahrzeug beispielsweise ohne auf die Rampe 104 zu fahren auf den Fahrstreifen der untersten Ebene verbleibt, da ein sichtbarer Horizont nicht auswandert, oder ob das Fahrzeug auf die Rampe 104 der Richtungsfahrbahn 410 in der ersten Fahrtrichtung fährt, und deshalb der sichtbare Horizont auswandert. Insbesondere eine Routenführung unter eingeschränkten Navigationsverhältnissen kann so verbessert werden.

Fig. 5 zeigt eine Darstellung eines Bilds 200 einer Kamera eines Fahrzeugs zum Durchführen eines Verfahrens zum Erkennen einer über eine Rampe 104 geführten Fahrbahn 106 gemäß einem weiteren Ausführungsbeispiel der vorliegenden Erfindung. Das Bild 200 ist wie das Bild in Fig. 2 rechteckig. Das Bild 200 weist Bildpunkte in horizontalen Zeilen und vertikalen Spalten auf. Jedem Bildpunkt ist eine Bildpunktkoordinate zugeordnet. Das Bild 200 zeigt eine Perspektive einer Frontkamera des Fahrzeugs. In dem Bild 200 ist die Fahrbahn 106 vor dem Fahrzeug abgebildet. Das Fahrzeug ist vor der Rampe 104 auf der Fahrbahn 106 angeordnet. Die Fahrbahn weist drei Fahrstreifen 500, 502, 504 auf. Der erste Fahrstreifen 500 ist rechts neben dem Fahrzeug angeordnet und verläuft rechts neben der Rampe 104 ebenerdig weiter. Der erste Fahrstreifen 500 ist durch eine Fahrstreifenbegrenzungslinie von dem zweiten Fahrstreifen abgegrenzt. Auf dem zweiten Fahrstreifen 502 ist das Fahrzeug angeordnet. In geringer Entfernung vor dem Fahrzeug ist der zweite Fahrstreifen 502 auf die Rampe 104 geführt und verläuft ansteigend nach oben. Der dritte Fahrstreifen 504 ist links neben dem Fahrzeug angeordnet und von dem zweiten Fahrstreifen 502 durch eine durchgehende, verdoppelte Mittenmarkierung 506 abgetrennt. Der dritte Fahrstreifen 504 ist ebenfalls auf die Rampe 104 geführt. Im Bild 200 sind neben der Fahrbahn 106 mehrere Landmarken dargestellt. Neben dem ebenen Teilstück der Fahrbahn 106 ist ein erster Baum 202 dargestellt. Neben der Rampe 104 ist ein zweiter Baum 204, ein erstes Haus 206, ein zweites Haus 506 und eine Kirche 508 dargestellt. An den Landmarken 202, 204, 206, 506, 508 sind jeweils charakteristische Punkte markiert, die durch eine

Bildverarbeitungsvorschrift erkannt werden können. Die Bildmerkmale können zur Wiedererkennung genutzt werden. Die charakteristischen Punkte weisen jeweils einen Höhenwinkel oder vertikalen Blickwinkel bezogen auf eine Bezugsebene der Kamera auf. Der Höhenwinkel wird durch eine Anzahl Bildpunkte zwischen dem charakteristischen Punkt und der Bezugsebene repräsentiert. Beispielsweise ist an dem ersten Baum 202 die Baumspitze markiert. An dem ersten Haus 206 ist ein Anfallspunkt des Dachs markiert, an dem zweiten Haus 506 ist eine Traufe des Dachs markiert und an der Kirche 508 ist erneut der Anfallspunkt des Dachs markiert. Ebenso können andere Punkte, beispielsweise die Kirchturmspitze, eine Hauskante oder eine Ecke einer Schilderbrücke markiert sein. Das Bild 200 ist aufgenommen, bevor das Fahrzeug auf die Rampe 104 fährt. Wenn sich das Fahrzeug auf der Rampe 104 befindet, dann verändert sich der Höhenwinkel auf die Landmarken 202, 204, 206, 506, 508, da ein Bildausschnitt des Bilds auf der Rampe 104 sich mit der Bezugsebene des Fahrzeugs auf der schrägen Rampe verschwenkt, die Landmarken 202, 204, 206, 506, 508 jedoch ortsfest sind. Die Änderung des vertikalen Blickwinkels kann erfasst werden und daraus die Befahrung der Rampe 104 erkannt werden.

Mit anderen Worten zeigt Fig. 5 ein Bild 200 mit exemplarisch gekennzeichneten natürlichen Landmarken 202, 204, 206, 506, 508, für die es Bildmerkmale gibt, die ein leichtes Wiedererkennen gestatten. Mit ihrer Position und der GPS-Position können diese Landmarken 202, 204, 206, 506, 508 in einer Datenbank abgespeichert werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Verfahren (300) zum Erkennen einer über eine Rampe (104) geführten Fahrbahn (106) basierend auf einem, aus einer Perspektive eines Fahrzeugs (100) aufgenommenen Bild (200), wobei das Verfahren (300) die folgenden Schritte aufweist:

   Bestimmen (302) einer ersten charakteristischen Breite (L1, L2) der Fahrbahn (106) im Bild (200) an einer ersten Bildposition des Bilds (200) und einer zweiten charakteristischen Breite (L3) der Fahrbahn (106) im Bild (200) an einer zweiten Bildposition des Bilds (200);
   Ermitteln (304) einer erwarteten zweiten charakteristischen Breite unter Verwendung der ersten charakteristischen Breite (L1, L2) und einem Abstand im Bild (200) zwischen der ersten Bildposition und der zweiten Bildposition; und
   Vergleichen (306) der zweiten charakteristischen Breite (L3) mit der erwarteten zweiten charakteristischen Breite, um die Rampe (104) zu erkennen.

2. Verfahren (300) gemäß Anspruch 1, bei dem im Schritt (304) des Ermittelns die erwartete zweite charakteristische Breite ferner unter Verwendung der Perspektive des Fahrzeugs (100) ermittelt wird.

3. Verfahren (300) gemäß einem der vorangegangenen Ansprüche, bei dem im Schritt (302) des Bestimmens je eine Anzahl von Bildpixeln ausgewertet wird, die in einer Linie nebeneinander zwischen zwei charakteristischen Punkten der Fahrbahn (106) im Bild (200) angeordnet sind, um die erste charakteristische Breite (L1, L2) und die zweite charakteristische Breite (L3) zu bestimmen.

4. Verfahren (300) gemäß Anspruch 3, bei dem die Bildpixel in einer Reihe oder Spalte des Bilds (200) angeordnet sind.

5. Verfahren (300) gemäß einem der vorangegangenen Ansprüche, bei dem im Schritt (302) des Bestimmens die erste charakteristische Breite (L1, L2) einen ersten Abstand im Bild (200) zwischen einer ersten Längsmarkierung (212) auf der Fahrbahn (106) und einer zweiten Längsmarkierung (212) auf der Fahrbahn (106) an der ersten Bildposition repräsentiert und/oder die zweite charakteristische Breite (L3) einen zweiten Abstand im Bild (200) zwischen der ersten Längsmarkierung (212) und der zweiten Längsmarkierung (212) an der zweiten Bildposition repräsentiert.

6. Verfahren (300) gemäß einem der vorangegangenen Ansprüche, bei dem im Schritt (302) des Bestimmens die erste Bildposition eine erste Projektion einer ersten Schnittebene auf die Fahrbahn (106) repräsentiert, wobei die erste Schnittebene unter einem ersten Tiefenwinkel zu einer Bezugsebene (208) des Bilds (200) ausgerichtet ist, und/oder die zweite Bildposition eine zweite Projektion einer zweiten Schnittebene auf die Fahrbahn (106) repräsentiert, wobei die zweite Schnittebene unter einem zweiten Tiefenwinkel zu der Bezugsebene (208) des Bilds (200) ausgerichtet ist.

7. Verfahren (300) gemäß einem der vorangegangenen Ansprüche, bei dem im Schritt (302) des Bestimmens zumindest eine weitere charakteristische Breite (L1, L2) der Fahrbahn (106) im Bild (200) an einer weiteren Bildposition des Bilds (200) bestimmt wird, wobei die weitere Bildposition zwischen der ersten Bildposition und der zweiten Bildposition angeordnet ist und im Schritt (304) des Ermittelns die erwartete zweite charakteristische Breite ferner unter Verwendung der weiteren charakteristischen Breite (L1, L2) und einem Abstand zwischen der ersten Bildposition und der weiteren Bildposition und/oder einem Abstand zwischen der zweiten Bildposition und der weiteren Bildposition ermittelt wird.

8. Verfahren (300) zum Erkennen einer über eine Rampe (104) geführten Fahrbahn (106) basierend auf einem aus einer Perspektive eines Fahrzeugs (100) aufgenommenen Bild (200), wobei das Verfahren (300) die folgenden Schritte aufweist:

   Bestimmen (302) einer charakteristischen Höhe eines markanten Bildpunkts des Bilds bezüglich einer Bezugsebene (208) des Bilds (200), wobei der markante Bildpunkt ein charakteristisches Merkmal einer Landmarke (202, 204, 206, 506, 508) in dem Bild (200) abbildet;
   Ermitteln (304) einer erwarteten Höhe des markanten Bildpunkts unter Verwendung einer hinterlegten Position des charakteristischen Merkmals der Landmarke (202, 204, 206, 506, 508); und
   Vergleichen (306) der charakteristischen Höhe mit der erwarteten Höhe, um die Rampe (104) zu erkennen.

9. Vorrichtung zum Erkennen einer über eine Rampe (104) geführten Fahrbahn (106) basierend auf einem, aus einer Perspektive eines Fahrzeugs (100) aufgenommenen Bild (200), wobei die Vorrichtung ausgebildet ist, um die Schritte eines Verfahrens gemäß einem der Ansprüche 1 bis 8 durchzuführen.

10. Computer-Programmprodukt mit Programmcode zur Durchführung des Verfahrens nach einem der Ansprüche 1 bis 8, wenn das Programmprodukt auf einer Vorrichtung ausgeführt wird.

# Fig. 1

102 100

108
110
112

114

122 118 106

104

106 116

120

# Fig. 2

200 106

210
208
Y3
206
Y2
Y1

204

202

L3
L2
L1

212 104 212

**Fig. 3a**

300

302

304

306

**Fig. 3b**

300

308

310

311

302

304

306

312

314

# Fig. 4

# Fig. 5

Europäisches
Patentamt

European
Patent Office

Office européen
des brevets

**EUROPÄISCHER RECHERCHENBERICHT**

Nummer der Anmeldung

EP 13 18 7475

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 051 206 A1 (VALEO VISION [FR]) 22. April 2009 (2009-04-22) * Absatz [0021] - Absatz [0030]; Anspruch 8; Abbildungen * ----- | 1-6,9,10 | INV. G01C21/26 G06K9/00 |
| X | JP 2010 040015 A (HONDA MOTOR CO LTD) 18. Februar 2010 (2010-02-18) * Zusammenfassung * * Absatz [0013] - Absatz [0026] * ----- | 1,7,9,10 | |
| X | WO 01/48508 A1 (DAIMLER CHRYSLER AG [DE]; LARICE MARKUS [DE]; STEINER WERNER [DE]) 5. Juli 2001 (2001-07-05) * Seite 4, Zeile 4 - Zeile 17; Abbildungen 1,2 * ----- | 8-10 | |
| A | JP 2008 032557 A (TOSHIBA CORP; TOSHIBA SOLUTIONS CORP) 14. Februar 2008 (2008-02-14) * Zusammenfassung * * Absatz [0044] - Absatz [0049]; Abbildungen 12-19 * ----- | 1-10 | RECHERCHIERTE SACHGEBIETE (IPC) G01C G06K |

Der vorliegende Recherchenbericht wurde für alle Patentansprüche erstellt

| Recherchenort | Abschlußdatum der Recherche | Prüfer |
|---|---|---|
| Den Haag | 18. Februar 2014 | Hoekstra, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
....................................................................
& : Mitglied der gleichen Patentfamilie, übereinstimmendes Dokument

EPO FORM 1503 03.82 (P04C03)

EP 2 728 310 A1

**ANHANG ZUM EUROPÄISCHEN RECHERCHENBERICHT**
**ÜBER DIE EUROPÄISCHE PATENTANMELDUNG NR.**    EP 13 18 7475

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2014

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 2051206 | A1 | 22-04-2009 | AT | 478400 | T | 15-09-2010 |
| | | | EP | 2051206 | A1 | 22-04-2009 |
| | | | FR | 2922671 | A1 | 24-04-2009 |
| | | | JP | 2009133830 | A | 18-06-2009 |
| | | | US | 2009103781 | A1 | 23-04-2009 |
| JP 2010040015 | A | 18-02-2010 | JP | 4913101 | B2 | 11-04-2012 |
| | | | JP | 2010040015 | A | 18-02-2010 |
| WO 0148508 | A1 | 05-07-2001 | DE | 19962491 | A1 | 05-07-2001 |
| | | | EP | 1240533 | A1 | 18-09-2002 |
| | | | US | 2003021445 | A1 | 30-01-2003 |
| | | | WO | 0148508 | A1 | 05-07-2001 |
| JP 2008032557 | A | 14-02-2008 | KEINE | | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008043120 A1